# EUROPEAN PATENT SPECIFICATION

(11) **EP 0 697 319 B1**
(45) Date of publication and mention of the grant of the patent: **03.05.2000**
(21) Application number: 95305745.2
(22) Date of filing: 17.08.1995
(51) Int. Cl.: B61D 17/04, B61D 1/06, B61D 17/08, B62D 31/04

(54) **Car body for a railway rolling stock**
Wagenkasten für ein Schienenfahrzeug
Caisse pour une voiture ferroviaire

(30) Priority: 19.08.1994 JP 19514994
(43) Date of publication of application: 21.02.1996
(73) Proprietor: HITACHI, LTD., Chiyoda-ku, Tokyo (JP)
(72) Inventor: Ohara, Mamoru, Kudamatsu-shi, Yamaguchi-ken (JP); Hattori, Morishige, Kudamatsu-shi, Yamaguchi-ken (JP); Kimura, Kengi, Kudamatsu-shi, Yamaguchi-ken (JP); Horihata, Katsutoshi, Kudamatsu-shi, Yamaguchi-ken (JP)
(74) Representative: Hackney, Nigel John

(56) References cited:
- EP-A- 0 260 200
- EP-A- 0 354 436
- EP-A- 0 495 429

## Description

The present invention relates to a car body for two-deck railway rolling stock.

A conventional body structure for a two-deck rolling stock is constructed by forming a frame structure by longitudinally and crosswise arranging and joining together frame members of ferrous materials, and joining panels to the frame structure to secure strength.

A light alloy body structure formed of an aluminum alloy for a two-deck rolling stock is formed by assembling extruded shapes. Such a light alloy body structure is mentioned, for example, in JAPAN RAILFAN MAGAZINE, Koyusha, pp. 77-85, June, 1992.

Another prior art car body for a two-deck rolling stock which has the features of the first part of claim 1 is disclosed in FR2635064-A. A car body constructed by assembling light alloy laminated panels is mentioned in, for example, EP0579500A1.

Increase in the passenger capacity of a rolling stock is effective in efficiently transporting passengers. Since the increase of the passenger capacity increases the gross car weight of the rolling stock, the weight of the car body must be reduced to the lowest possible extent. The increase of the gross car weight entails problems, such as increase in shocks on the rails, noise generated by the traveling rolling stock, operating power cost, and braking energy consumed for stopping the rolling stock.

A car body for a two-deck rolling stock must have a high rigidity because a large load acts on the car body in the middle portion of the car body. When trains pass each other in a tunnel, a sharp pressure variation occurs and a large pressure acts on the rolling stock. It is known that the pressure that acts on the rolling stock varies in proportion to the square of the traveling speed. Therefore, the rigidity and the strength of the car body must be enhanced. However, the increase of the rigidity and the strength of the car body is contradictory to the reduction of the weight of the car body, and hence it is difficult to construct the car body in a lightweight construction without sacrificing the rigidity and the strength of the car body.

Those contradictory conditions, i.e., the enhancement of the rigidity of the car body and the reduction of the weight of the car body, may be satisfied by using light alloy extruded shapes to form the principal members of the car body. However, since the rigidities of light alloys are lower than those of ferrous materials, a car body formed by assembling light alloy extruded shapes needs many reinforcing members, which increases time and labor for manufacturing the car body structure and the weight of the car body.

Accordingly, it is an object of the present invention to provide a body structure for a two-deck rolling stock, formed in a lightweight construction and having a high rigidity.

The present invention provides a car body for railway rolling stock, as set out in claim 1.

Since the longitudinal positions of joint lines between the side panels joined to the upper surface of the intermediate beam of the side structure coincide with those of joint lines between the side panels joined to the lower surface of the same intermediate beam, respectively, any useless torsional force does not act on the intermediate beam. Accordingly, any reinforcing members are unnecessary, and the car body can be constructed in a lightweight construction by assembling component members respectively having comparatively small thicknesses.

The above and other objects, features and advantages of the present invention will become more apparent from the following description of preferred embodiments of the present invention.
Fig. 1 is a sectional view of a car body for a two-deck roiling stock, in a first embodiment according to the present invention;
Fig. 2 is a perspective view of the car body of Fig. 1 and its principal frame members, not giving details of the longitudinal positions of the side panel joint lines;
Fig. 3 is an enlarged sectional view of a portion III in Fig. 1;
Fig. 4 is an enlarged sectional view of a portion IV in Fig. 1;
Fig. 5 is an enlarged sectional view of a portion V in Fig. 1;
Fig. 6 is a sectional view of a laminated panel;
Fig. 7 is a perspective view of arrangement of panels and frame members in the car body of Fig. 1;
Fig. 8 is an enlarged sectional view of a portion VIII in Fig. 7;
Fig. 9 is a sectional view taken on line IX-IX in Fig. 8;
Fig. 10 is a sectional view taken on line X-X in Fig. 8;
Fig. 11 is a perspective view of a car body in a second embodiment according to the present invention, not giving details of the longitudinal positions of the side panel joint lines; and
Fig. 12 is a sectional view taken on line XII-XII in Fig. 11.

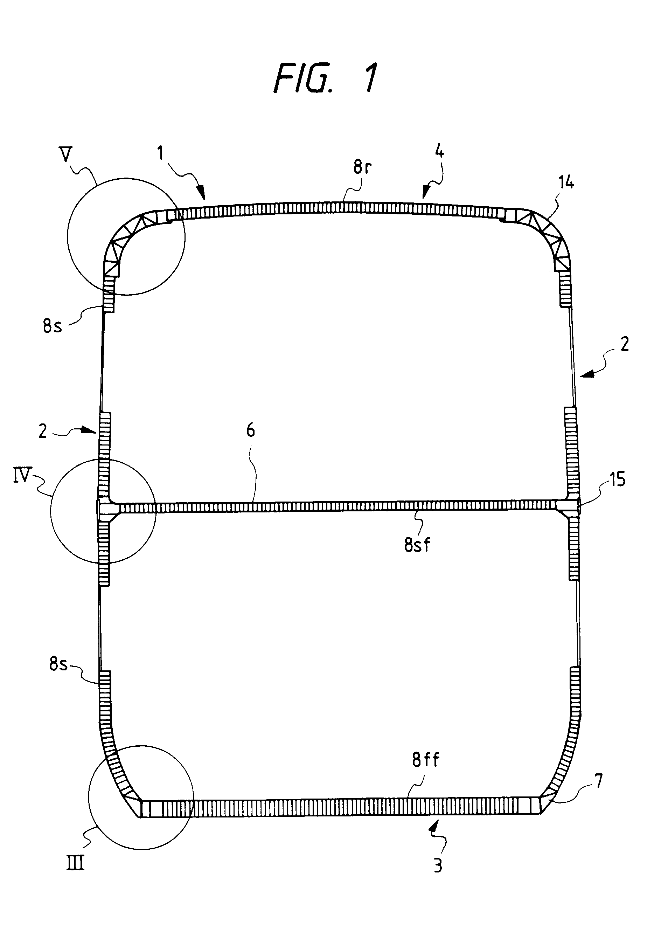

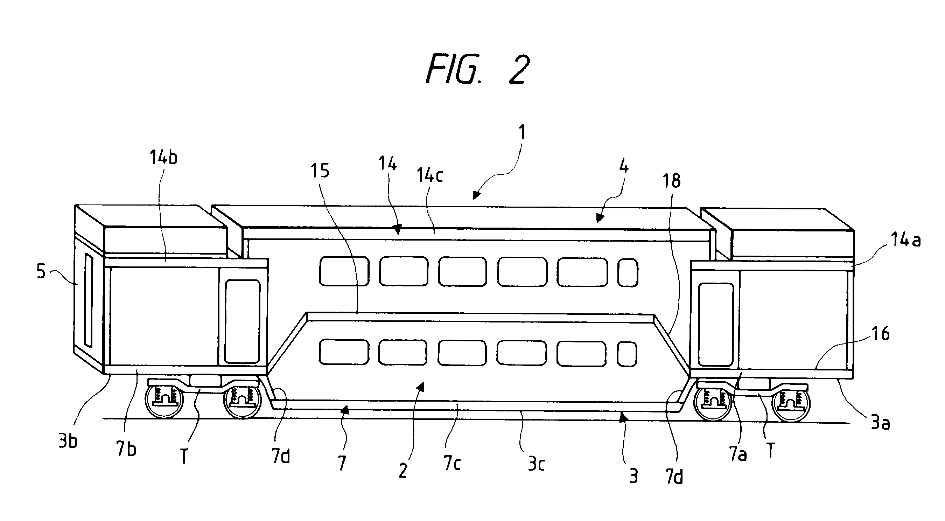

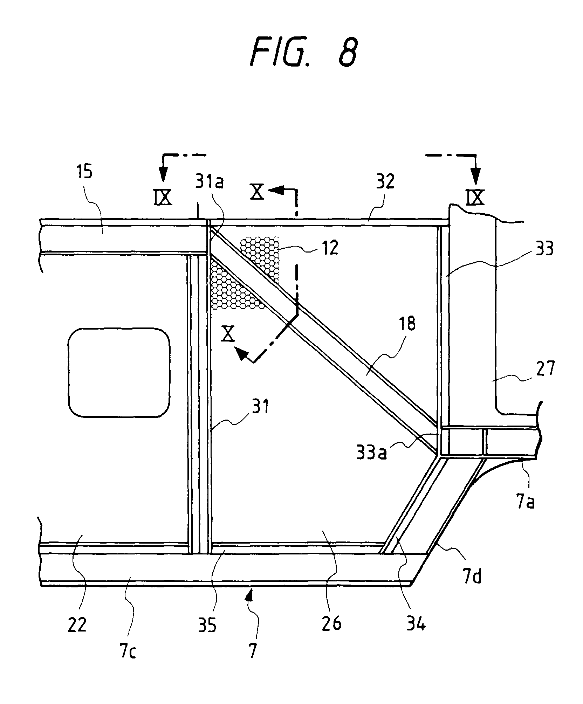

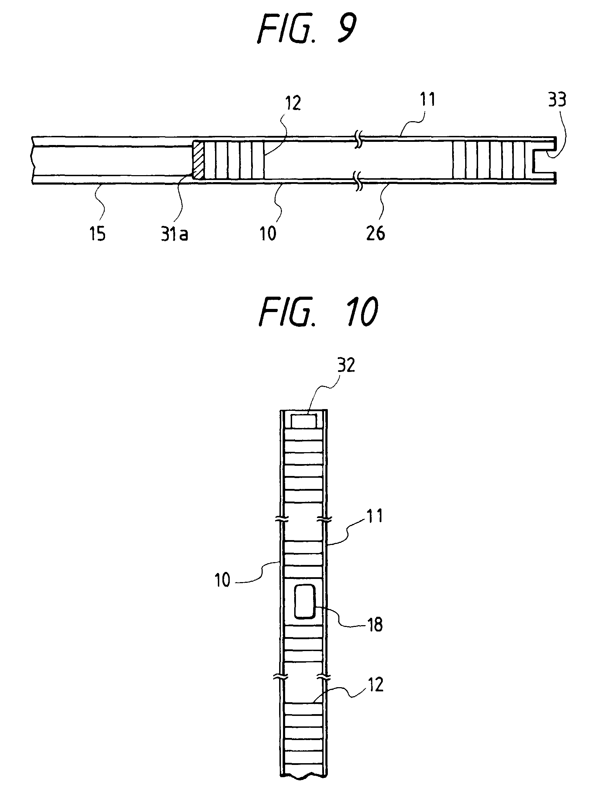

A car body in a first embodiment according to the present invention will be described with reference to Figs. 1 to 10. A body car 1 comprises a pair of side structures 2, an underframe 3, a roof structure 4, a pair of end structures 5 and an upper deck structure 6. The underframe 3 comprises a pair of end underframe sections 3a and 3b, and a middle underframe section 3c disposed between the end underframe sections 3a and 3b. The end underframe section sections 3a and 3b are supported on bogies T, respectively. Side beams 7 extend longitudinally along the opposite sides of the underframe 3. Each side beam 7 is an aluminum alloy extruded shape having a cross section having hollow spaces defined by partition walls. Each side beam 7 has end side beam sections 7a and 7b extended along the sides of the end underframe sections 3a and 3b, a middle side beam section 7c extended along the side of the middle underframe section 3c, and connecting side beams 7d respectively connecting the middle side beam section 7c to the end side beam sections 7a and 7b. The middle side beam section 7c is extended on a level below the level of the end side beam sections 7a and 7b. Body bolsters and cross beams are extended between the pair of side beams 7 and a floor board 8ff formed by assembling laminated panels 8, which will be described later, is extended between the pair of side beams 7.

Each side structure 2 comprises an intermediate beam 15, an eaves beam 14, and a plurality of side panels 8s forming the side walls of passenger chambers and utility spaces. The side panels 8s are formed of the laminated panels 8. The side walls of the lower passenger chamber and the upper passenger chamber are formed by longitudinally arranging the plurality of side panels 8s and welding together the adjacent side panels 8s. Most side panels 8s is provided with window openings. The intermediate beam 15 is extended on the same level as an upper floor 6 partitioning the lower passenger room and the upper passenger room to support the upper floor 6. The intermediate beam 15 is an aluminum alloy extruded shape having a cross section having hollow spaces defined by partition walls. The plurality of side panels 8s are welded to the upper and the lower surface of the intermediate beam 15. The longitudinal positions of joint lines between the side panels 8s welded to the upper surface of the intermediate beam 15 coincide with those of joint lines between the side panels 8s welded to the lower surface of the intermediate beam 15, respectively. The vertical dimension of the side panels 8s arranged between the intermediate beam 15 and the middle side beam section 7c is equal to the interval between the intermediate beam 15 and the middle side beam section 7c.

The eaves beam 14 is extended longitudinally along the upper edge of the side structure 2. The eaves beam 14 has a middle eaves beam section 14c corresponding to the upper passenger chamber, and end eaves beam sections 14a and 14b corresponding to the utility spaces. The vertical dimension of the side panels 8s arranged between the intermediate beam 15 and the middle eaves beam section 14c is equal to the interval between the intermediate beam 15 and the middle eaves beam section 14c.

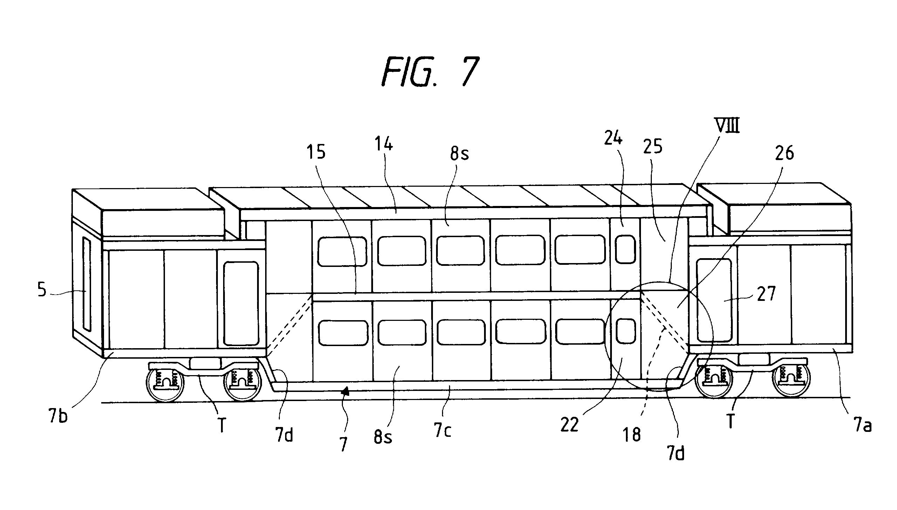

The opposite longitudinal ends of the intermediate beam 15 are connected to the end side beam sections 7a and 7b of the end underframe sections 3a and 3b by the connecting beams 18, respectively. As shown in Fig. 7, each connecting beam 18 is extended diagonally within a side panel 26 so that its upper end is on the side of the middle of the car body 1. A side panel 25 disposed above the side panel 26 is not provided with any window opening. The construction of the panels 25 and 26 is basically identical with that of the side panels 8s.

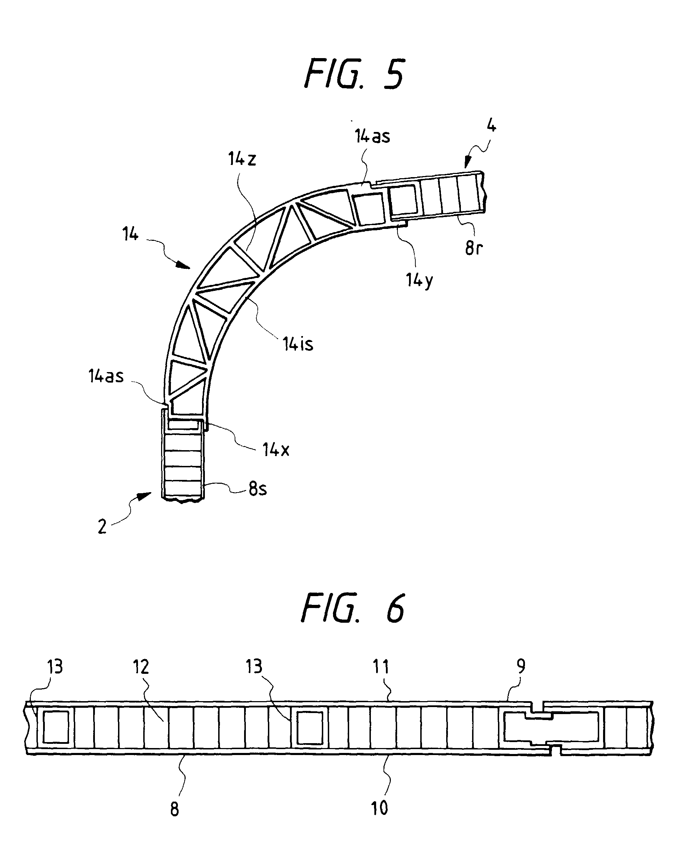

As shown in Fig. 6, each side panel 8 is a laminated structure comprising aluminum alloy surface members 10 and 11, core members 12 of a honeycomb construction sandwiched between the surface members 10 and 11, and joining members 9 sandwiched between the surface members 10 and 11. The surface members 10 and 11 are aluminum alloy plates. The surface member 11 serves as an interior panel and the surface member 10 serves as an exterior panel. The thickness of the surface member 10 is in the range of about 1.0 to about 1.2 mm, and the thickness of the surface member 11 is in the range of about 0.8 to about 1.0 mm. The thickness of the component plates of the core members 12 of a honeycomb construction is on the order of 0.2 mm. The core member 12 is joined to the joining members 9 and the surface members 10 and 11 by brazing. Each of the laminated panels 8 forming the side structure 2, the underframe 3, the roof structure 4 and the upper deck structure 6 is a laminated structure internally provided with reinforcing frame members 13 corresponding to the jambs and rafters of the conventional structure. The reinforcing frame members 13 are disposed between the core members 12 and sandwiched between the surface members 10 and 11. The component members of the laminated panel 8 are joined together by brazing. The joining members 9 are extended along the side edges of the laminated panel 8 and contiguously with the core members 12. The joining members 9, the surface members 10 and 11, and the core members 12 are joined together by brazing.

The eaves beam 14 extends along the upper edge of the side structure 2. The eaves beam 14 has a middle eaves beam section 14c, and a pair of end eaves beam sections 14a and 14b. The pair of end eaves beam sections 14a and 14b are connected to the middle eaves beam section 14c by connecting beams, respectively. The length of the middle eaves beam section 14c is substantially equal to that of the middle side beam section 7c, and the respective longitudinal positions of the middle eaves beam section 14c and the middle side beam section 7c coincide substantially with each other. A plurality of side panels 8s are arranged between the middle eaves beam section 14c and the intermediate beam 15 with their joining members 9 vertically extended. Each joining member 9 has one end joined to the middle eaves beam section 14c and the other end joined to the intermediate beam 15. A plurality of side panels are arranged between the end eaves beam section 14a and the end side beam section 7a and between the end eaves beam section 14b and the end side beam section 7b at each of the opposite longitudinal ends of the side structure 2, respectively.

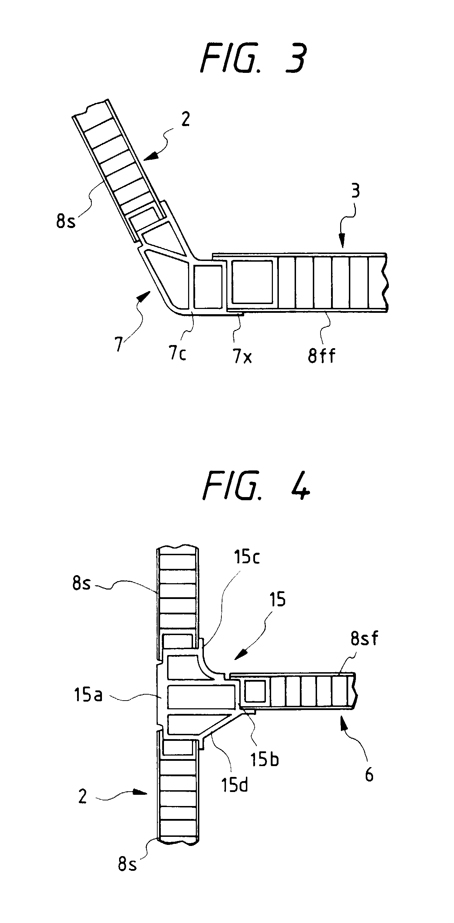

As shown in Fig. 3, the middle side beam section 7c is an aluminum alloy extruded shape having a closed cross section. The floorboard 8ff serving as the lower floor is welded to a support part 7x formed along the inner edge of the middle side beam section 7c. The support part 7x has a flange at its lower end to receive and support the floor board 8ff thereon.

As shown in Fig. 4, the intermediate beam 15 is an aluminum alloy extruded shape having a closed cross section. The intermediate beam 15 is extended longitudinally of the car body 1. The side panels 8s are welded to the upper and the lower surface of the intermediate beam 15, respectively. The upper deck structure 6 is welded to an inner support part 15b of the intermediate beam 15. The intermediate beam 15 has parts to which the side panels 8s and floor panels 8sf forming the upper deck structure 6 are welded and has a T-shaped cross section. The intermediate beam 15 has an outer surface 15a smoothly merging into the outer surfaces of the side panels 8s of the side structure 2. The support part 15b to which the upper deck structure 6 is joined is formed in a shape conforming to the joining edge of the upper deck structure 6; that is, the support part 15b has a lower flange on which the upper deck structure 6 is placed. The intermediate beam 15 is provided with oblique walls 15c and 15d to avoid stress concentration due to the vertical load of the upper deck structure 6 exerted on the support part 15b.

The upper deck structure 6 is constructed by joining a plurality of floor panels 8sf, i.e., the laminated panels 8, arranged longitudinally of the car body 1. The longitudinal positions of the joint lines between the floor panels 8sf coincide with the longitudinal joint lines between the side panels 8s, respectively. The floor panels 8sf may be arranged longitudinally and transversely of the body car depending on the dimensions thereof.

As shown in Fig. 5, the eaves beam 14 is an aluminum alloy extruded shape having a closed cross section. The eaves beam 14 has an outer surface 14as smoothly merging into the outer surfaces of the side panels 8s of the side structure 2 and the outer surfaces of the side panels 8s of the roof structure 4. For example, when the outer surface of the side panel 8s is a part of the surface of a circular cylinder, the outer surface 14as of the eaves beam 14 is a part of the surface of a circular cylinder of the same curvature. The middle part of the outer surface of the eaves beam 14 is a part of the surface of a circular cylinder. Thus, the outer surface 14as of the eaves beam 14 has the shape of a part of the surface of a circular cylinder.

The inner surface 14is of the eaves beam 14, similarly to the outer surface 14as, has the shape of a part of the surface of a circular cylinder. The eaves beam 14 has a joining flange 14x to which the side panels 8s are joined, a joining flange 14y to which the roof structure 5 is joined, and internal hollow spaces defined by partition walls 14z.

The roof structure 4 is constructed by joining a plurality of roof panels 8r, i.e., the laminated panels 8, arranged longitudinally of the car body 1. The longitudinal positions of the joint lines between the roof panels 8r coincide with those of the side panels 8s, respectively. The roof panels 8r may be arranged longitudinally and transversely depending on the dimensions thereof.

Since the longitudinal positions of the joint lines between the side panels 8s joined to the upper surface of the intermediate beam 15 coincide with those of the side panels 8s joined to the lower surface of the intermediate beam 15, respectively, the car body 1 has an enhanced strength against pressure that acts on the car body 1. Since the joining members 9 of the adjacent side panels 8s are welded together along the joint lines and are welded to the intermediate beam 15, the joining members 9 serve as frame members supporting the side panels 8s and enhances the pressure withstand strength of the car body 1. When a pressure acts on the joining member 9, a bending load acts on the joining member 9, and the bending load acting on each of the joining members 9 of the side panels 8s acts as a torsional force to twist the intermediate beam 15. Since the longitudinal positions of the joint lines between the adjacent side panels 8s joined to the upper surface of the intermediate beam 15 coincide with those of the joining lines between the adjacent side panels 8s joined to the lower surface of the intermediate beam 15, respectively, the torsional force applied to the intermediate beam 15 by the joining member 9 of the side panel 8s joined to the upper surface of the intermediate beam 15 and that of the joining member 9 of the side panel 8s joined to the lower surface of the intermediate beam 15 at corresponding joining lines cancel each other, so that a reduced torsional force acts on the intermediate beam 15 Therefore, the intermediate beam 15 may be of a comparatively lightweight construction.

Since each side panel 8s is disposed between the intermediate beam 15 and the middle side beam section 7c with its pair of joining members 9 vertically extended, the interval between the intermediate beam 15 and the middle side beam section 7c can be secured and hence the deformation of the side panels 8s can be avoided. The intermediate beam 15, the middle side beam section 7c and the joining members 9 of the side panels 8s form a rigid grid-shaped frame, which contributes to forming the side structure 2 in a high strength and a high rigidity. Since the side panels 8s are lighter than hollow extruded shapes equivalent to the side panels 8s in strength and rigidity, the use of the side panels 8s contributes to constructing the car body 1 in a lightweight construction. Whereas an extruded shape has a comparatively low bending strength and needs reinforcement to withstand a bending load, the side panels 8s are isotropic in strength and are suitable as the structural members of a car body 1 which needs a high pressure withstand strength.

The reinforcing frame members 13 of the side panel 8s have the same function and effect as those of the joining members 9. The side panels 8c are joined to the upper and the lower surface of the intermediate beam 15 so that the joint lines between the side panels 8s joined to the upper surface of the intermediate beam 15 coincide with the reinforcing frame members 13 of the side panels 8s joined to the lower surface of the intermediate beam 15, respectively, or so that the reinforcing frame members 13 of the side panels 8s joined to the upper surface of the intermediate beam 15 coincide with those of the side panels 8s joined to the lower surface of the intermediate beam 15 to reduce the torsional force that acts on the intermediate beam 15.

The side panels 8s are arranged between the intermediate beam 15 and the middle eaves beam section 14c with their joining members 9 vertically extended. The joining members 9 secure the interval between the intermediate beam 15 and the middle eaves beam section 14c and prevents the deformation of the side panels 8s. The function and effect of those joining members 9 and the reinforcing frame members 13 are the same as those of the joining members 9 and the reinforcing frame members 13 of the side panels 8s arranged between the intermediate beam 15 and the middle side beam section 7c.

In the side structure 2, the longitudinal positions of the joint lines between the side panels 8s arranged between the middle side beam section 7c and the intermediate beam 15 coincide with those of the joint lines between the side panels 8s arranged between the intermediate beam 15 and the middle eaves beam section 14c, respectively. Therefore, the vertical reinforcing frame members are arranged longitudinally at intervals over the entire length of the side structure 2 and serves as jambs. Since the joining members 9 and the reinforcing frame members 13 are arranged within the side panels 8s, the inner surface of the car body 1 is smooth and, therefore, fittings can be arranged regardless of the dimensional accuracy of the car body 1, which facilitate work for rigging the car body 1.

The longitudinal positions of joint lines between the roof panels 8r forming the roof structure 4 coincide with those of the joint lines between the side panels 8s joined to the middle eaves beam section 14c, respectively. Therefore, the joining members 9 or the reinforcing frame members 13 of the laminated panels 8 extend continuously around the car body 1 from the middle side beam section 7c through the intermediate beam 15, the middle eaves beam section 14c, the other middle eaves beam section 14c and the other intermediate beam 15 to the other middle side beam section 7c to reinforce the car body by the joining members 9 or the reinforcing frame members 13 of the laminated panels 8, extending perpendicularly to the side beams 7, the intermediate beams 15 and the eaves beams 14 enhance the strength and the rigidity of the car body 1. The number of the component parts of the car body 1 is less than that of the component parts of the conventional car body constructed by combining plate members and frame members.

The middle side beam sections 7c, the intermediate beams 15 and the middle eaves beam sections 14c form part of the outer surface of the car body 1, and the laminated panels 8 are joined to the middle side beam sections 7c, the intermediate beams 15 and the middle eaves beam sections 14c so that their outer surfaces merge smoothly into the outer surfaces of the middle side beam sections 7c, the intermediate beams 15 and the middle eaves beam sections 14c, respectively. The middle side beam sections 7c, the intermediate beams 15, the middle eaves beam sections 14c and the laminated panels 8 are substantially the same in thickness. Accordingly, loads can be smoothly transferred between the laminated panels 8, and the middle side beam sections 7c, the intermediate beams 15 and the middle eaves beam sections 14c. Consequently, stress concentration does not occur at the joints of those members and the outer surface of the car body 1 has satisfactory smoothness.

Each of the eaves beam 14 and the intermediate beams 15 may be either a monolithic aluminum alloy extruded shape or a combinational aluminum alloy extruded shape formed by combining a plurality of sectional aluminum alloy extruded shapes and joining together the adjacent sectional aluminum alloy extruded shapes.

The middle eaves beam sections 14c each having an inner surface 14is formed in the shape of part of the surface of a circular cylinder are advantageous in constructing a pressure resistant structure capable of withstanding the variation of the internal and external pressures that occurs when the rolling stock travels at a high traveling speed.

The laminated panels 8 are placed on the support parts 7x of the middle side beam sections 7c, the support parts 15b of the intermediate beams 15, and the joining parts 14y of the middle eaves beam section 14c, respectively, which facilitates work for positioning and joining together those members.

The construction of the joints between the respective end side beam sections 7a and 7b of the end underframe sections 3a and 3b, and the middle side beam section 7c, and the construction of the joints between the respective end side beam sections 7a and 7b of the end underframe sections 3a and 3b, and the intermediate beam 15 will be described with reference to Figs. 7 to 10. The end underframe section 3a (3b) comprises bolsters, not shown, or center sills for holding a coupler, not shown, disposed at a position where the car body 1 is supported on a bogie T, and the end side beam sections 7a (7b) longitudinally extended on the opposite sides of the end underframe section 3a (3b). Since the end underframe sections 3a and 3b and the associated structures are in mirror image relation, only the right end underframe section 3a and the associated structures shown in Fig. 7 will be described below. The left end of the end side beam section 7a as viewed in Fig. 7, i.e the end on the side of the middle of the car body 1, is connected to the middle side beam section 7c and the intermediate beam 15 by the connecting side beam 7d and the connecting beam 18, respectively. The connecting side beam 7d and the connecting beam 18 extend diagonally from the left end of the end side beam section 7a in opposite directions, respectively, with respect to a horizontal plane.

The end side beam section 7a, the connecting side beam 7d and the middle side beam section 7c are the component members of the underframe 3 and are joined together when assembling the underframe 3. The connecting beam 18 is included in the side panel 26 disposed between the intermediate beam 16 and the end underframe section 3a; that is, the connecting beam 18 is extended through a core member sandwiched between a pair of surface members. The side panel 26 is joined to a horizontally adjacent side panel 22, the vertically adjacent side panel 25, a doorway block 27 disposed on the end underframe section 3a, the intermediate beam 15 and the end side beam section 7a. Joining members 31, 32, 33, 34 and 35 are arranged along the outer edges of the side panel 26 so as to surround the core member. The joining members 31, 32, 33, 34 and 35 are joined to the side panel 22, the side panel 25 on the upper deck, the doorway block 27, the connecting side beam 7d and the middle side beam section 7c, respectively, so that the end side beam section 7a and the intermediate beam 15 are interconnected by the connecting beam 18.

A tractive force or a braking force exerted through the bogie T and the coupler on the car body 1 is transmitted through the end side beam sections 7a of the end underframe section 3a, the connecting side beams 7d and the connecting beams 18 to the middle side beam sections 7c and the intermediate beams 15. The tractive force or the braking force is further transmitted from the middle side beam sections 7c and the intermediate beams 15 through the connecting side beams 7d and the connecting beams 18 on the other end of the car body 1 to the end side beam sections 7b. Then, the tractive force or the braking force is transmitted from the end side beam sections 7b through the bolsters and another coupler to the other bogie T or the next car body connected to the car body 1 by another coupler.

Even though the side beams 7 of the under frame 3 are bending, the tractive force and the braking force is transmitted through the intermediate beam 15 extended in parallel to the middle side beam section 7c and, consequently, problems including stress concentration do not arise in the car body 1 due to the tractive force and the braking force. The side structure 2 can be easily fabricated by arranging the side panels 8s, the side panels 26, the side panel 24 and the doorway blocks 27 on a jig and joining together the adjacent panels. The plurality of side panels are joined to each doorway block 27.

Since each connecting beam 18 are extended within the side panel 26 and does not project outside from the outer and the inner surfaces of the car body 1 and hence the car body 1 has smooth outer and inner surfaces. The smooth inner surface of the car body 1 facilitates attaching fixtures to the car body 1. Since each connecting beam 18 is brazed to the surface member, the surface of the car body 1 is less warped than that of the conventional car body constructed by welding exterior board to frame members. Each connecting beam 18 is brazed to the surface members and the core members 12, whereby the connecting beam 18 is reinforced by the surface members and the core members 12. Therefore, the connecting beam 18 may be a lightweight shape consisting of walls of a comparatively small thickness, which contributes to constructing the car body 1 in a lightweight construction.

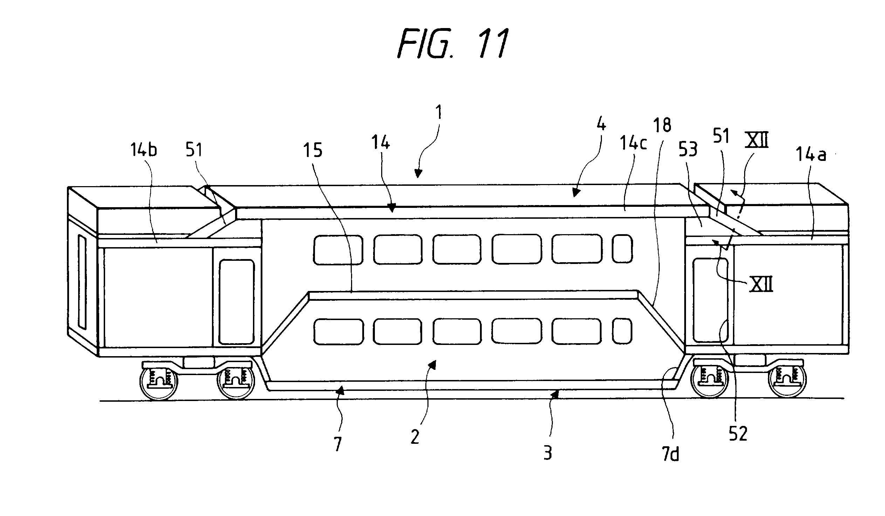

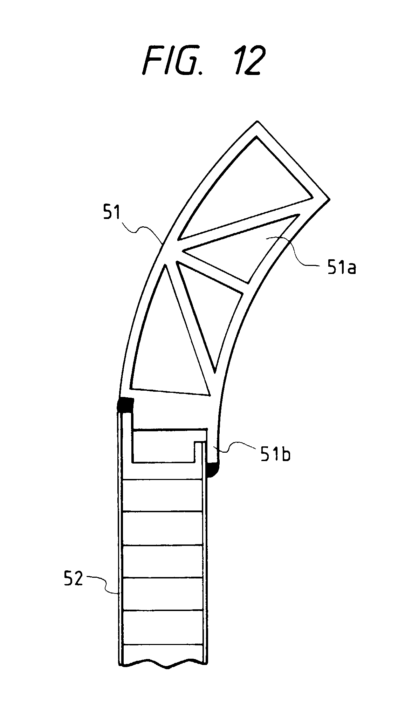

A car body in a second embodiment according to the present invention will be described hereinafter with reference to Figs. 11 and 12, in which parts like or corresponding to those of the first embodiment are designated by the same reference characters. The longitudinal positions of the joint lines are identical to those of the first embodiment, this second embodiment differing from the first embodiment only in the respects defined hereinafter. Referring to Figs. 11 and 12, middle eaves beam sections 14c are connected to end eaves beam sections 14a and 14b by connecting beams 51, respectively. Each connecting beam 51 is a hollow aluminum alloy extruded shape having a closed cross section and hollows 51a. The connecting beam 51 is joined to the middle eaves beam section 14c so that the hollow spaces 51a correspond to those of the middle eaves beam section 14c, respectively. Thus, a sharp change in shape at the junctions of the middle eaves beam section 14c, and the end eaves beam sections 14a and 14b is avoided, so that troubles including stress concentration can be avoided. The connecting beam 51 is joined to the middle eaves beam section 14c so that the outer and the inner surface of the connecting beam 51 merge smoothly into the outer surface 14as and the inner surface 14is of the middle eaves beam section 14c. A side block 53 is disposed under the connecting beam 51 and is joined to the upper edge of a side doorway block 52, which facilitates work for joining the side block 53 to the connecting beam 51.

## Claims

1. A car body for railway rolling stock, comprising: an underframe (3) having a pair of end underframe sections (3a, 3b) and a middle underframe section (3c) disposed between the pair of end underframe sections on a level below the level of the pair of end underframe sections; a pair of side structures (2); a roof structure (4); a pair of end structures (5); an upper deck structure (6) extending over the middle underframe section; and side beams (7) extending longitudinally along the opposite sides of the underframe;
each of the pair of side structures comprising an intermediate beam (15) extending longitudinally and supporting the upper deck structure (6), and a plurality of first side panels (8s) joined to the upper surface of the intermediate beam and a plurality of second side panels (8s) joined to the lower surface of the intermediate beam;
characterised in that:-
each of the first and second side panels (8s) comprises a pair of surface members (10, 11), core members (12) sandwiched between the surface members, and joining members (9) disposed between and along the edges of the pair of surface members (10, 11);
in each said side structure the first and second side panels (8s) are arranged in respective longitudinal arrays with contiguously adjacent side panels in each array being joined together and said array of the first panels being joined to the upper surface of the intermediate beam and said array of the second side panels being joined to the lower surface of the intermediate beam; wherein
the longitudinal positions of joint lines between the first side panels (8s) joined to the upper surface of the intermediate beam coincide with those of joint lines between the second side panels (8s) joined to the lower surface of the intermediate beam, respectively.

2. A car body according to claim 1, wherein in each side structure (2), said second side panels are arranged between the side beam (7) and the intermediate beam (15) with at least two opposite joining members (9) of each of the second side panels extending vertically.

3. A car body according to claim 2, wherein each of the vertically extending opposite joining members (9) of each second side panel have one end joined to the side beam (7) and the other end joined to the intermediate beam (15).

4. A car body according to any one of claims 1 to 3, wherein the intermediate beam (15) is a hollow, light alloy, extruded shape, the surface of each intermediate beam forms part of the outer surface of the car body, and the outer surface of the outer surface member (10) of each side panel merges smoothly into the outer surface of the intermediate beam.

5. A car body according to any one of claims 1 to 4, wherein an eaves beam (14) extends longitudinally along the upper edge of each side structure, and the plurality of first side panels are arranged between the eaves beam and the intermediate beam (15) with at least two opposite joining members (9) of each side panel extending vertically.

6. A car body according to claim 5, wherein each of the vertically extending opposite joining members (9) of each first side panel have one end joined to the eaves beam (14) and the other end joined to the intermediate beam (15).

7. A car body according to claim 5 or 6, wherein the eaves beam (14) is a light alloy extruded shape, the surface of the eaves panel (14) forms part of the outer surface of the car body, and the outer surface of the outer surface member (10) of each first side panel merges smoothly into the outer surface of the eaves beam.

8. A car body according to claim 5, wherein the eaves beam (14) has a middle eaves beam section (14c) longitudinally extending in the middle portion of the car body, and a pair of end eaves beam sections (14a, 14b) connected to the opposite ends of the middle eaves beam section by connecting beams (51) respectively, the end eaves beam sections (14a, 14b) extend on a level lower than that of the middle eaves beam section (14c), and each connecting beam (51) extends diagonally in a vertical plane including the side structure so as to incline upwardly towards the middle of the car body.

9. A car body according to any one of claims 1 to 4, wherein the roof structure comprises a plurality of roof panels (8r) each comprising a pair of surface members, core members sandwiched between the surface members, and joining members disposed between and along the edges of the pair of surface members,
the roof panels (8r) are arranged longitudinally, one after another contiguously, and the joining members of the adjacent roof panels are joined together, and
the longitudinal positions of joining lines between the adjacent roof panels coincide with those of joining lines between the adjacent side panels of the side structure.

10. A car body according to claim 9, wherein the pair of parallel opposite joining members of each roof panel are joined the eaves beams (14) extending along the upper edges of the side structures.

11. A car body according to any one of claims 1 to 10, wherein the opposite longitudinal ends of each intermediate beam (15) are joined to the end side beam sections of the underframe by connecting beams (18), respectively,
each of which connecting beams (18) extends diagonally upward towards the middle of the car body within the side panel so as to be sandwiched between said surface members (10, 11) and held between said core members (12).

12. A car body according to any one of claims 1 to 11, wherein each side panel is provided with vertical reinforcing members (13) sandwiched between said surface members (10, 11) and held between said core members (12).

## Patentansprüche

1. Karosserie für Eisenbahnfahrzeuge, umfassend: einen Unterrahmen (3) mit einem Paar Unterrahmen-Endstücke (3a, 3b) und einem Unterrahmen-Mittelstück (3c), das zwischen den beiden Unterrahmen-Endstücken in einer Höhe unterhalb der beiden Unterrahmen-Endstücke angeordnet ist; ein Paar Seitenstrukturen (2); eine Dachstruktur (4); ein Paar Endstrukturen (5); eine obere Deckstruktur (6), die sich über den mittleren Unterrahmenabschnitt erstreckt; und Seitenträger (7), die sich entlang der gegenüberliegenden Seiten des Unterrahmens in Längsrichtung erstrecken;
wobei jede der beiden Seitenstrukturen einen Mittelträger (15) umfaßt, der sich in Längsrichtung erstreckt und die obere Deckstruktur (6) und mehrere erste Seitenpaneele (8s) trägt, die an der oberen Fläche des Mittelträgers verbunden sind, sowie mehrere zweite Seitenpaneele (8s), die an der unteren Fläche des Mittelträgers verbunden sind;
dadurch gekennzeichnet, daß:
jede der ersten und zweiten Seitenpaneele (8s) ein Paar Oberflächenelemente (10, 11), zwischen den Oberflächenelementen angeordnete Kernelemente (12) und Verbindungselemente (9) aufweist, die zwischen und entlang der Kanten der Oberflächenelementpaare (10, 11) angeordnet sind;
in jeder der Seitenstrukturen die ersten und zweiten Seitenpaneele (8s) jeweils in längs verlaufenden Feldern angeordnet sind, wobei unmittelbar aneinander angrenzende Seitenpaneele in jedem Feld miteinander verbunden sind und das Feld der ersten Paneele mit der oberen Fläche des Mittelträgers verbunden ist und das Feld der zweiten Seitenpaneele mit der unteren Fläche des Mittelträgers verbunden ist; wobei
die Längspositionen der Verbindungslinien zwischen den ersten Seitenpaneelen (8s), die mit der oberen Fläche des Mittelträgers verbunden sind, jeweils mit den Verbindungslinien zwischen den zweiten Seitenpaneelen (8s), die mit der unteren Fläche des Mittelträgers verbunden sind, übereinstimmen.

2. Karosserie nach Anspruch 1, wobei bei jeder Seitenstruktur (2) die zweiten Seitenpaneele zwischen dem Seitenträger (7) und dem Mittelträger (15) angeordnet sind, so daß von jedem der zweiten Seitenpanele mindestens zwei gegenüberliegende Verbindungselemente (9) vertikal verlaufen.

3. Karosserie nach Anspruch 2, wobei jedes der vertikal verlaufenden, gegenüberliegenden Verbindungselemente (9) der jeweiligen zweiten Seitenpaneele an einem Ende mit dem Seitenträger (7) und am anderen Ende mit dem Mittelträger (15) verbunden sind.

4. Karosserie nach einem der Ansprüche 1 bis 3, wobei der Mittelträger (15) ein hohles, aus einer Leichtlegierung bestehendes Strangprofil ist, die Oberfläche jedes der Mittelträger einen Teil der Außenoberfläche der Karosserie bildet und die Außenfläche der Oberflächenelemente (10) der jeweiligen Seitenpaneele glatt in die Außenoberfläche des Mittelträgers übergeht.

5. Karosserie nach einem der Ansprüche 1 bis 4, wobei sich ein Dachträger (14) entlang der oberen Kante jeder Seitenstruktur in Längsrichtung erstreckt, und mehrere der ersten Seitenpaneele zwischen dem Dachträger und dem Mittelträger (15) angeordnet sind, wobei sich mindestens zwei gegenüberliegende Verbindungselemente (9) jedes Seitenpaneels vertikal erstrecken.

6. Karosserie nach Anspruch 5, wobei jedes der vertikal verlaufenden gegenüberliegenden Verbindungselemente (9) der jeweiligen ersten Seitenpaneele an einem Ende mit dem Dachträger (14) und am anderen Ende mit dem Mittelträger (15) verbunden ist.

7. Karosserie nach einem der Ansprüche 5 oder 6, wobei der Dachträger (14) ein aus einer Leichtlegierung bestehendes Strangprofil ist, die Oberfläche des Dachträgers (14) einen Teil der Außenfläche der Karosserie bildet und die Außenfläche des äußeren Oberflächenelements (10) der ersten Seitenpaneele glatt in die Außenfläche des Dachträgers übergeht.

8. Karosserie nach Anspruch 5, wobei der Dachträger (14) aus einem mittleren Dachträgerstück (14c), das sich in Längsrichtung im mittleren Bereich der Karosserie erstreckt, und einem Paar Dachträgerendstücke (14a, 14b) besteht, die jeweils mit den gegenüberliegenden Enden des mittleren Dachträgerstücken über Verbindungsträger (51) verbunden sind, sich die Dachträgerendstücke (14a, 14b) in einer Höhe unterhalb der mittleren Dachträgerabschnitte (14c) erstrecken und jeder Verbindungsträger (51) diagonal in einer vertikalen Ebene verläuft, die die Seitenstruktur einschließt, so daß er nach oben in Richtung zur Karosseriemitte ansteigt.

9. Karosserie nach einem der Ansprüche 1 bis 4, wobei die Dachstruktur mehrere Dachpaneele (8r) umfaßt, deren jede ein Paar Oberflächenelemente, zwischen den Oberflächenelementen angeordnete Kernelemente und Verbindungselemente aufweist, die zwischen und entlang der Kanten der Oberflächenelementpaare angeordnet sind,
die Dachpaneele (8r) in Längsrichtung aneinander angrenzend angeordnet sind, und die Verbindungselemente von angrenzenden Dachpaneelen miteinander verbunden sind, und
die Längsposition der Verbindungslinien zwischen angrenzenden Dachpaneelen mit den Verbindungslinien zwischen angrenzenden Seitenpaneelen der Seitenstruktur übereinstimmen.

10. Karosserie nach Anspruch 9, wobei die Paare paralleler, gegenüberliegender Verbindungselemente jedes Dachpaneels mit den Dachträgern (14) verbunden sind, die entlang der oberen Kanten der Seitenstrukturen verlaufen.

11. Karosserie nach einem der Ansprüche 1 bis 10, bei der die in Längsrichtung gegenüberliegenden Enden jedes Zwischenträgers (15) mit den Enden der Seitenträgerabschnitte des Unterrahmens über Verbindungsträger (18) verbunden sind,
wobei sich die jeweiligen Verbindungsträger (18) diagonal nach oben in Richtung zur Karosseriemitte innerhalb der Seitenpaneele erstrecken, so daß sie zwischen den Oberflächenelementen (10, 11) verlaufen und zwischen den Kernelementen (12) gehalten werden.

12. Karosserie nach einem der Ansprüche 1 bis 11, wobei jedes Seitenpaneel mit vertikalen Verstärkungselementen (13) versehen ist, die zwischen den Oberflächenelementen (10, 11) verlaufen und zwischen den Kernelementen (12) gehalten werden.

## Revendications

1. Caisse de voiture pour matériel roulant ferroviaire, comportant: un châssis (3) ayant une paire de sections d'extrémités (3a, 3b) de châssis et une section médiane (3c) de châssis disposée entre la paire de sections d'extrémités de châssis à un niveau situé sous le niveau de la paire de sections d'extrémités de châssis; une paire de structures latérales (2); une structure de pavillon (4); une paire de structures d'extrémités (5); une structure de plancher supérieur (6) s'étendant sur la section médiane de châssis; et des poutres latérales (7) s'étendant longitudinalement le long des côtés opposés du châssis;
chaque structure de la paire de structures latérales comprenant une poutre intermédiaire (15) s'étendant longitudinalement et supportant la structure de plancher supérieur (6), et une pluralité de premiers panneaux latéraux (8s) réunis à la surface supérieure de la poutre intermédiaire et une pluralité de deuxièmes panneaux latéraux (8s) réunis à la surface inférieure de la poutre intermédiaire;
caractérisée en ce que:
chacun des premiers et deuxièmes panneaux latéraux (8s) comprend une paire d'éléments de surface (10, 11), des éléments d'âme (12) pris en sandwich entre les éléments de surface, et des éléments d'assemblage (9) disposés entre et le long des bords de la paire d'éléments de surface (10, 11);
dans chaque dite structure latérale les premiers et deuxièmes panneaux latéraux (8s) sont disposés en groupes longitudinaux respectifs, des panneaux latéraux adjacents de manière contiguë dans chaque groupe étant réunis les uns aux autres et ledit groupe des premiers panneaux étant réuni à la surface supérieure de la poutre intermédiaire et ledit groupe des deuxièmes panneaux latéraux étant réuni à la surface inférieure de la poutre intermédiaire; dans laquelle
les positions longitudinales de lignes d'assemblage entre les premiers panneaux latéraux (8s) réunis à la surface supérieure de la poutre intermédiaire coïncident respectivement avec celles de lignes d'assemblage entre les deuxièmes panneaux latéraux (8s) réunis à la surface inférieure de la poutre intermédiaire.

2. Caisse de voiture selon la revendication 1, dans laquelle, dans chaque structure latérale (2), lesdits deuxièmes panneaux latéraux sont disposés entre la poutre latérale (7) et la poutre intermédiaire (15), au moins deux éléments d'assemblage opposés (9) de chacun des deuxièmes panneaux latéraux s'étendant verticalement.

3. Caisse de voiture selon la revendication 2, dans laquelle chacun des éléments d'assemblage verticaux opposés (9) de chaque deuxième panneau latéral ont une première extrémité réunie à la poutre latérale (7) et l'autre extrémité réunie à la poutre intermédiaire (15).

4. Caisse de voiture selon l'une quelconque des revendications 1 à 3, dans laquelle la poutre intermédiaire (15) est un profilé extrudé creux en alliage léger, la surface de chaque poutre intermédiaire fait partie de la surface extérieure de la caisse de voiture, et la surface extérieure de l'élément de surface extérieur (10) de chaque panneau latéral se fond harmonieusement dans la surface extérieure de la poutre intermédiaire.

5. Caisse de voiture selon l'une quelconque des revendications 1 à 4, dans laquelle une poutre de corniche (14) s'étend longitudinalement le long du bord supérieur de chaque structure latérale, et la pluralité de premiers panneaux latéraux sont disposés entre la poutre de corniche et la poutre intermédiaire (15), au moins deux éléments d'assemblage opposés (9) de chaque panneau latéral s'étendant verticalement.

6. Caisse de voiture selon la revendication 5, dans laquelle chacun des éléments d'assemblage opposés (9) s'étendant verticalement de chaque premier panneau latéral a une première extrémité réunie à la poutre de corniche (14) et l'autre extrémité réunie à la poutre intermédiaire (15).

7. Caisse de voiture selon la revendication 5 ou 6, dans laquelle la poutre de corniche (14) est un profilé extrudé en alliage léger, la surface du panneau de corniche (14) fait partie de la surface extérieure de la caisse de voiture, et la surface extérieure de l'élément de surface extérieur (10) de chaque premier panneau latéral se fond harmonieusement dans la surface extérieure de la poutre de corniche.

8. Caisse de voiture selon la revendication 5, dans lequel la poutre de corniche (14) a une section médiane (14c) de poutre de corniche s'étendant longitudinalement dans la partie médiane de la caisse de voiture, et une paire de sections d'extrémités (14a, 14b) de poutre de corniche reliées respectivement par des poutres de liaison (51) aux extrémités opposées de la section médiane de poutre de corniche, les sections d'extrémités (14a, 14b) de poutre de corniche s'étendent à un niveau plus bas que celui de la section médiane (14c) de poutre de corniche, et chaque poutre de liaison (51) s'étend en diagonale dans un plan vertical contenant la structure latérale de façon à s'incliner vers le haut en direction du milieu de la caisse de voiture.

9. Caisse de voiture selon l'une quelconque des revendications 1 à 4, dans laquelle la structure de toit comprend une pluralité de panneaux de pavillon (8r) comprenant chacun une paire d'éléments de surface, des éléments d'âme pris en sandwich entre les éléments de surface, et des éléments d'assemblage disposés entre et le long des bords de la paire d'éléments de surface,
les panneaux de pavillon (8r) sont disposés longitudinalement, de manière contiguë à la suite les uns des autres, et les éléments d'assemblage des panneaux de pavillon adjacents sont réunis les uns aux autres, et
les positions longitudinales de lignes d'assemblage entre les panneaux de pavillon adjacents coïncident avec celles de lignes d'assemblage entre les panneaux latéraux adjacents de la structure latérale.

10. Caisse de voiture selon la revendication 9, dans laquelle la paire d'éléments d'assemblage opposés parallèles de chaque panneau de pavillon sont réunis aux poutres de corniches (14) s'étendant le long des bords supérieurs des structures latérales.

11. Caisse de voiture selon l'une quelconque des revendications 1 à 10, dans laquelle les extrémités longitudinales opposées de chaque poutre intermédiaire (15) sont respectivement réunies aux sections de poutres latérales d'extrémités du châssis par des poutres de liaison (18),
chacune desdites poutres de liaison (18) s'étend en diagonale vers le haut en direction du milieu de la caisse de voiture dans le panneau latéral de façon à être prise en sandwich entre lesdits éléments de surface (10, 11) et retenue entre lesdits éléments d'âme (12).

12. Caisse de voiture selon l'une quelconque des revendications 1 à 11, dans laquelle chaque panneau latéral est pourvu d'éléments de renfort verticaux (13) pris en sandwich entre lesdits éléments de surface (10, 11) et retenus entre lesdits éléments d'âme (12).
